# EUROPEAN PATENT APPLICATION

(11) **EP 4 566 809 A1**
(43) Date of publication of application: **11.06.2025**
(21) Application number: 23215254.6
(22) Date of filing: 08.12.2023
(51) Int. Cl.: B32B 7/12, B32B 27/08, B32B 27/10, B32B 27/32, B32B 27/34, B32B 27/36, B32B 29/08, B65D 65/40

(54) **CONTAINER FOR PRODUCTS OF THE FOOD INDUSTRY**

(71) Applicant: Mondi AG, 1030 Wien (AT)
(72) Inventor: ROSENWIRTH, Johannes, 9500 Villach (AT); KOINIG, Albin, 9462 Bad St. Leonhard (AT); GROSSEGGER, Josef, 8740 Zeltweg (AT)
(74) Representative: Puchberger & Partner Patentanwälte

(57) **Abstract**

The present disclosure relates to a container (1) for products of the food industry, the container (1) comprising a wall comprising: a paper-based layer (110, 210, 310); a barrier layer (130, 230, 330) being an at least one-sided metallized polymer layer, preferably an at least one-sided metallized polyester layer, more preferably an at least one-sided metallized polyethylene terephthalate (mPET) layer; a lamination layer (120, 220, 320), bonding the paper-based layer (110, 210, 310) and the barrier layer (130, 230, 330); wherein the lamination layer (120, 220, 320) has a grammage of at most 20 grams per square meter, gsm, preferably at most 15 gsm, more preferably at most 12 gsm, more preferably at most 10 gsm, more preferably at most 8 gsm, more preferably at most 6 gsm, more preferably at most 5 gsm, most preferably at most 4 gsm.

## Description

### Technical field

The present invention relates to a container for products of the food industry. In particular, the invention relates to a container for products of the food industry comprising a wall wherein the wall comprises layers such that the share of the paper of the container can be increased.

### Background

Nowadays, containers for packaging of various food products are widely used. They are particularly useful for maintaining the food products in a desired state so as to reduce their degradation. Such containers are used for instance for potato chips or other chips, dehydrated food powder, coffee, milk powder, tobacco or the like.

In particular, can shaped composite containers are widely used. These containers have a rigid tubular body, a top closure of the tubular body that can be opened and a bottom closure of the tubular body which is permanently attached to the tubular body.

In order to fulfill customer requirements, such containers have to reveal certain properties. For instance they should be rigid enough to be handled properly. Further, they should have a sufficient sealing ability, an adequate mechanical integrity, and a low coefficient of friction (COF). The COF represents a level of friction that the packaging material has when interacting with different parts of the packaging machine. In addition, such containers should have a high share of paper to improve recycling capabilities.

In the prior art, attempts have been made to meet these requirements.

The body of the containers of the prior art usually consists of a multilayer liner comprising a paper layer, e.g., kraft-layer for mechanical stability and a barrier layer. The bottom of the container is typically made from a metal plate. The top closure of the container is usually provided such that the opening happens in the paper layer of the body of the container.

The suggested solutions in the prior art have several disadvantages.

For instance, the walls of the containers consist of a plurality of different materials. Thus, they are difficult to recycle. In addition, the paper share may not be optimal to facilitate processing in paper recycling streams. This can lead to an increase in waste and can have adverse environmental impacts. In addition, the top closure of the container may not be optimally matched to the body of the container to facilitate peeling off the top closure.

In view of the above drawbacks, it is of importance to provide an improved container comprising a wall, so as to address the above-mentioned drawbacks. Against this background, it is an object of the present invention to overcome the above disadvantages at least partially.

### Summary of the invention

The objects are achieved, at least partly, by a container for products of the food industry comprising a wall, a method for manufacturing a wall of such a container, and a container for products of the food industry, according to the subject-matter of the independent claims. Further aspects of the present disclosure are defined in the dependent claims. Since the container for products of the food industry comprising a wall, the method for manufacturing a wall of such a container, and the container for products of the food industry, all relate to the same filed, it will be understood that advantages and/or features are interchangeable applicable.

### Container comprising a wall

In particular, the object is achieved by a container for products of the food industry, the container comprising a wall comprising: a paper-based layer; a barrier layer being an at least one-sided metallized polymer layer, preferably an at least one-sided metallized polyester layer, more preferably an at least one-sided metallized polyethylene terephthalate (mPET) layer; a lamination layer, bonding the paper-based layer and the barrier layer; wherein the lamination layer has a grammage of at most 20 gsm, preferably at most 15 gsm, more preferably at most 12 gsm, more preferably at most 10 gsm, more preferably at most 8 gsm, more preferably at most 6 gsm, more preferably at most 5 gsm, most preferably at most 4 gsm.

In this manner, the container according to the present disclosure provides the advantage that substantially no aluminum need to be used for the container. This improves the recycling capabilities and reduces environmental impacts, whilst the performance characteristics of the container are maintained or can be increased.

Further, the overall share of the paper of the container can be increased, which is attributable to the paper-based layer, the barrier layer, and the lamination layer. This has the advantage that recycling is improved, since time, effort, and costs of separating different materials, which cannot be recycled together, can be saved. In one particular example, the container can be recycled by way of mechanical recycling, which may be an extraordinary efficient recycling process.

The paper-based layer increases the mechanical stability and integrity of the container. Thereby, the container has sufficient mechanical properties so as to withstand impacts due to handling and/or due to environmental impacts. In addition, the share of the paper of the container is increased bay way of the paper-based layer.

The barrier layer may allow for a barrier so as to prevent any kind of fluids and/or particles from at least partially passing through the barrier layer. The fluids and/or particles include but are not limited to water vapor, moisture, oxygen, mineral oil, and/or grease. This may increase the shelf life of the goods within the container. Accordingly, this bears the potential to prevent waste of food. Further, the barrier layer may also improve protection against environmental impacts. The metallized side of the barrier layer may be either side of the two sides of the barrier layer, i.e., the side facing the paper-based layer or the side facing away from it. Preferably, the metallized side of the polymer layer faces the paper-based layer. This has the advantage that the polymer may protect the metallized side from damage, which may occur during ordinary use of the container.

The lamination layer facilitates that two layers, e.g., the paper-based layer and the barrier layer can be held together. In this manner, it is understood that the lamination layer is arranged between the paper-based layer and the barrier layer. The lamination layer may be understood as a bonding layer. In some instances, it may be understood as an adhesive layer. The lamination layer as described herein has the particular advantage that it can be provided thinner than in the prior art. This reduces the amount of polymer, saves material, and increases the share of the paper of the container.

In particular, the inventors found that the application of a metallized polymer as a barrier layer provides for the advantage that the grammage of the lamination layer can be reduced. The reduction of the grammage of the lamination layer provides a more cost-effective container, whilst at the same time sufficient bonding between the paper-based layer and the barrier layer can be ensured.

Different kinds of lamination processes may be applicable and are certainly encompassed by the present disclosure. For instance, heat lamination with adhesives or ultrasonic lamination may be applied.

It is noted that the wall may comprise further layers and/or elements and is not limited to the layers specified herein. For instance, there may be one or more further kraft liners or the like. The wall may be any wall of the container or at least a part of a wall of the container. The wall may be a side wall, a top wall and/or a bottom wall of the container.

The container may store any kind of products. The products may include but may not be limited to potato or other chips, food powder, such as dehydrated food powder, coffee, milk powder, tobacco, crisp food products, snacks, nuts, or the like. The container may in some instances have the shape of a can. The container may be a paper based spiral wound can.

The container may not be understood limiting in a manner such that a closed or fully closed arrangement is required. Rather, the container must merely have a wall, which can have further layers. Thereby, any structural arrangement having a wall, wherein the structural arrangement could be used as a container, e.g., by way of further processing steps to the container comprising the wall, are encompassed herein.

Overall the container comprising the wall improves packaging of various products of the food industry and improves the performance of said packaging and reduces ecological impacts.

Preferably, the barrier layer is a double-sided metallized polymer layer, preferably a double-sided metallized polyethylene terephthalate (mPETm) layer.

The double-sided metallized polymer layer, in particular the double-sided metallized polyethylene terephthalate (mPETm) has the advantage that a high barrier performance can be achieved even if the metallized parts may be damaged. Such a damage may occur during usage, during machining, and/or during converting or the like. The metallized parts of the mPETm has the advantage to provide a high barrier. The polymer, e.g., the PET, of the double-sided metallized polymer layer may protect any one of the metallized parts. In turn, the double-sided metallized polymer layer increases the protection and the barrier performance.

In addition, an optimum bonding of the lamination layer and/or the sealing layer may be provided by way of the doubled-sided metallized polymer layer. In particular, when the sealing layer is an extrusion coated layer, this may improve bonding to the metallized surface of the mPETm. It has been found that this is advantageous over bonding to a PET surface.

Typically, in the prior art, such an mPETm is not employed, as there are technical difficulties in providing such a double-sided metallized layer. This may be the case since two separate metallization runs need to be performed. The inventors paved a way to circumvent this issue.

Preferably, the polymer of the at least one-sided and/or double-sided metallized polymer is selected from a list comprising polyester and polyolefin, wherein, optionally, polyester comprises polyethylene-terephthalate (PET), polybutylene-terephthalate (PBT), polyethylene-furanoate (PEF), polyhydroxy-butyrate (PHB), polylactide (PLA) and the like, wherein, optionally, polyolefin comprises polyethylene (PE), polypropylene (PP) and the like.

It is advantageous that substantially any polyester and/or polyolefin can be employed for the polymer of the barrier layer. Polyester has proven to be particularly advantageous. Usage of a polyolefin as the polymer of the barrier layer may also be advantageous. In some instance, rather polyester should be used, as polyester has improved performance compared to polyolefin in providing a barrier to mineral oil, in providing temperature stability due to heat and/or in providing abrasion resistance.

PET is quite tough and provides a rather high stretchability, which has additional benefits. In particular, PET allows for an improved curling area in a top portion of the container. In this manner, it provides for a bigger area, such that sealing can be improved.

It is appreciated that also bio-degradable polyesters can be used according to the present invention. The term "bio-degradable" as used herein may be understood as plastics that can be decomposed by the action of living organisms. Examples of such a bio-degradable polyester may be PHB, which is particularly attractive because of its compostable characteristics. It is noticed that usage of PLA as a further example of a bio-degradable polyester is also of growing importance as it can be economically produced from renewable resources.

Overall, the polymers as used in the barrier layer according to the present disclosure can facilitate an economically more efficient process and can make a valuable contribution to a higher sustainability.

Preferably, the barrier layer has a thickness of at most 30 µm, preferably at most 25 µm, more preferably at most 20 µm, more preferably at most 18 µm, more preferably at most 16 µm, more preferably at most 14 µm, most preferably at most 12 µm. Optionally the barrier layer has a thickness of at least 0.5 µm, preferably at least 1 µm, preferably at least 2 µm, more preferably at least 3 µm, more preferably at least 4 µm, more preferably at least 5 µm, most preferably at least 6 µm.

The reduced thickness has the advantage that the polymer share is lowered, whilst keeping a high barrier performance. In particular, the reduced thickness and the high barrier performance can be ensured by way of the one-sided or double-sided metallized polymer layer. In some examples, the thickness can be rather low, such as 0.5 µm, which may be relevant for condensation films.

Preferably, the paper-based layer has a grammage of at most 400 grams per square meter, gsm, preferably at most 300 gsm, more preferably at most 200 gsm, more preferably at most 150 gsm, more preferably at most 90 gsm, more preferably at most 80 gsm, more preferably at most 70 gsm, more preferably at most 60 gsm, more preferably at most 50 gsm, most preferably at most 40 gsm and/or the paper-based layer has a grammage of at least 10 gsm, preferably at least 14 gsm, more preferably at least 16 gsm, more preferably at least 18 gsm, more preferably at least 20 gsm, more preferably at least 25 gsm, more preferably at least 30 gsm, more preferably at least 35 gsm, most preferably at least 40 gsm.

This has the advantage that a high stability and mechanical integrity can be ensured. Further, the rather high share of paper provides for good recycling capabilities. In examples when the wall of the container is a bottom wall as described elsewhere herein, the paper-based layer has a rather high value, e.g., in the range from 150-400 gsm, particularly in the range from 180-250 gsm. When the wall is a side wall or a top wall, the grammage may be typically lower.

Preferably, the lamination layer has a grammage of at least 0.5 gsm, preferably at least 1 gsm, more preferably at least 1.5 gsm, more preferably at least 2 gsm, more preferably at least 2.5 gsm, most preferably at least 3 gsm.

The lower limit of the grammage of the lamination layer has the advantage that sufficient material may be available for bonding. This improves the mechanical connection between the paper-based layer and the barrier layer.

These grammage of the lamination layer on the one hand has proven to be adequate to provide sufficient mechanical stability (a high grammage may be desirable) while on the other hand the material use is kept on a moderate level (a low grammage may be desirable). Thus, the inventors found that an optimal ratio should be struck.

Preferably, the wall of the container further comprises: a sealing layer, being an ionomer, preferably an abrasion resistant, extrusion coated layer, for at least partially sealing the container, preferably arranged adjacent the barrier layer on a side of the barrier layer facing away from the paper-based layer, preferably wherein the ionomer, preferably the abrasion resistant ionomer, extrusion coated layer comprises polyamide (PA), in particular polyamide 6.

Generally the ionomer extrusion coated layer could be of any construction. In particular an abrasion resistant (AR) extrusion coated layer may be employed. As an example, the ionomer AR may be an ionomer with about 10 to 30% polyamide (PA). As a further example, the ionomer AR may be a sodium ionomer with about 10 to 30% polyamide.

The ionomer AR may be identified as such by way of a shipping test in one example. For instance, the leakage of the container may be counted so as to determine that the ionomer is an ionomer AR when the leakage is sufficiently low and/or is lower than an upper threshold. Typically commonly known ionomers have a rather high upper threshold.

The sealing layer may act as a sealing to the interior of the container. The sealing layer facilitates a low coefficient of friction (COF), which provides particular advantages for machinability and/or processing. The sealing layer may have a lower melting temperature than the remaining layers (for instance, PET may have a rather high melting temperature). This facilitates sealing, e.g., by way of hot sealing. Thereby, the integrity of the remaining layers of the container is facilitated.

The sealing layer may be disposed adjacent the barrier layer so as to form the interior-facing layer of the wall.

As described elsewhere herein, in the top wall of the container, a different and/or more specific ionomer may be employed as compared to the side wall and/or the bottom wall of the container.

Preferably, the sealing layer has a grammage of at most 40 grams per square meter, gsm, preferably at most 35 gsm, more preferably at most 30 gsm, more preferably at most 28 gsm, more preferably at most 26 gsm, more preferably at most 24 gsm, most preferably at most 22 gsm, and/or the sealing layer has a grammage of at least 2 gsm, preferably at least 4 gsm, more preferably at least 6 gsm, more preferably at least 8 gsm, more preferably at least 10 gsm, most preferably at least 12 gsm.

The upper limit of the grammage of the sealing layer has the advantage that the sealing layer weight can be reduced whilst still the performance of said layer, e.g., a low COF, a high sealing ability, and/or a sufficient integrity of the container, can be ensured. In addition, the thickness of the sealing layer may thus be reduced, whilst maintaining sufficient resistance against sharp edged filling goods.

The ionomer abrasion resistant (AR) extrusion coated sealing layer having such a grammage may further enhance these advantages. The ionomer AR enhances abrasion resistance and allows to reduce the grammage of the sealing layer to a minimum. This may reduce the risk of damaging the barrier performance, which may occur for instance by sharp edged goods located within the container, or the like.

The ionomer AR may be particularly useful for the wall described herein when being a side wall of the container (e.g., a tubular side wall when the container has the shape of a can) and/or for the bottom wall of the container.

Preferably, the lamination layer comprises or substantially consists of a polyolefin, wherein, optionally, polyolefin comprises polyethylene (PE), polypropylene (PP), wherein, preferably, the lamination layer consists of PE or an ethylene-based copolymer or terpolymer.

The materials have the advantage that they can be easily procured and easily processed. In addition, they contribute to a sufficient bonding of layers and the mechanical integrity of the container.

An example for a suitable copolymer may be Ethylene Methacrylic Acid (EMAA). Further, the EMAA may comprise a low acid content, e.g. of about less than 2 or 3%.

### Bottom wall

In a preferred embodiment of the container as described herein, the wall is a bottom wall, wherein: the paper-based layer is a cardboard-based layer; the lamination layer is a polyethylene (PE) layer; wherein the lamination layer has a grammage of at most 25 gsm, preferably at most 20 gsm, preferably at most 18 gsm, more preferably at most 16 gsm, most preferably at most 15 gsm, and/or of at least 2 gsm, preferably at least 4 gsm, more preferably at least 6 gsm, more preferably at least 8 gsm, more preferably at least 10 gsm.

The bottom wall of the container typically stands on a ground during ordinary use of the container. However, when the container is rotated, e.g., by about 180 degrees, the bottom wall may be facing away from a ground as understood by the skilled person.

The cardboard-based layer provides for sufficient rigidity and mechanical integrity. In addition, the share of paper is increased thereby.

It is understood that the lamination layer referred to herein by way of the bottom wall corresponds to the lamination layer as described elsewhere herein, and further includes the additional limitation by way of the bottom wall. Hence, similar advantages as described elsewhere are applicable to the bottom wall. Same applies to all remaining layers even when not explicitly mentioned by way of the bottom wall but merely by way of the wall of the container.

In various examples, the lamination layer may have a grammage of, e.g., 11, 12, 13, or 14 gsm.

In various examples, the PE may be provided with one or more anchorage additives. An anchorage additive may be a mixture to improve abrasion resistance and adhesion of a coating, such as a cured coating. The mixture of the anchorage additive may comprise reactive silanes. Further, the PE can be a coextruded layer with ethylene-based co- or terpolymers. Any co- or terpolymers may be suitable. An example for a suitable copolymer may be Ethylene Methacrylic Acid (EMAA).

Preferably, the cardboard-based layer of the bottom wall has a grammage of at most 400 grams per square meter, gsm, preferably at most 350 gsm, more preferably at most 320 gsm, more preferably at most 300 gsm, more preferably at most 280 gsm, more preferably at most 260 gsm, most preferably at most 250 gsm, and/or the cardboard-based layer of the bottom wall has a grammage of at least 60 gsm, preferably at least 100 gsm, more preferably at least 120 gsm, more preferably at least 140 gsm, more preferably at least 160 gsm, most preferably at least 180 gsm.

Higher values of the grammage of the cardboard-based layer increase the fiber content and improve recyclability.

It is noted that the bottom wall of the container typically stands on a ground during ordinary use. In this manner, such an increased grammage of the paper-based layer, i.e., the cardboard-based layer, has the advantage that the overall stability can be improved. This may be the case, since the wall contacting the ground is provided with increased stability and supports the remaining parts of the container.

### Top wall

In a preferred embodiment of the container as described herein, the wall is a top wall, the top wall further comprising: a sealing layer comprising a peel coating such that the sealing layer of the top wall has a peel force of at least 2 N/15 mm, preferably at least 3 N/15 mm, more preferably at least 4 N/15 mm, most preferably at least 5 N/15 mm, and/or of at most 30 N/15 mm, preferably at most 25 N/15 mm, more preferably at most 20 N/15 mm, more preferably at most 15 N/15 mm, more preferably at most 10 N/15 mm, most preferably at most 8 N/15 mm; wherein the paper-based layer is a paper layer, preferably a kraft paper layer, more preferably a machine glazed bleached kraft paper layer.

This has the advantage that a rather high peel force is provided to the top wall. This ensures a sufficient rigidity and integrity of the container. The top wall as described herein is particularly advantageous when used in combination with the wall described herein being a side wall of the container. This is because substantially similar materials for the top wall and the side wall are employed. Thereby, surfaces may bond tightly together during heating. Accordingly, when the container is transported, a substantially safe housing is provided for any goods within the container. In addition, the sealing layer with the specified peel force has the advantage that the top wall may easily peel off, for instance when a consumer wants to access the interior of the container.

The top wall facilitates a convenient access for the consumer and supports that the container may be easily opened without tearing the container at an unwanted location thereof. This ensures the integrity of the container. In addition, the sealing to the wall being a side wall of the container can be ensured.

Any suitable material may be employed for the peel coating of the sealing layer. For instance, an ionomer with one or more blends, e.g., fillers, talcum, PE, PP, PB may be employed.

The machine glazed bleached kraft paper provides a high rigidity and durability. In addition, it provides extraordinarily high gloss on one side of the kraft paper.

The top wall may also be referred to as a membrane. The top wall may be provided such that it can be removed from the container. For instance, this may allow a consumer-friendly access to the interior of the container.

The metallization of the barrier layer of the top wall, in particular the double-sided metallization (e.g. mPETm) has the advantage that the optical density can be improved. This facilitations that an unwanted scrap rate during an optical sensor control for the membrane sealing integrity can be minimized.

It is understood that the top wall corresponds to the wall as described elsewhere herein, and further includes the additional limitation explicitly mentioned by way of the top wall. Hence, similar advantages as described elsewhere are applicable to the top wall.

The top wall of the container typically faces away from a ground during ordinary use. However, when the container is rotated, e.g., by about 180 degrees, the top wall may stand on a ground as understood by the skilled person.

Preferably, the sealing layer of the top wall has a grammage of at most 45 grams per square meter, gsm, preferably at most 40 gsm, more preferably at most 38 gsm, more preferably at most 36 gsm, more preferably at most 34 gsm, more preferably at most 32 gsm, most preferably at most 30 gsm, and/or the sealing layer of the top wall has a grammage of at least 10 gsm, preferably at least 12 gsm, more preferably at least 14 gsm, more preferably at least 16 gsm, more preferably at least 18 gsm, most preferably at least 20 gsm.

In various examples, the sealing layer of the top wall has a grammage of 27 gsm.

In various examples, the barrier layer has a thickness of at least 7 µm, preferably at least 8 µm. This has proven to be particularly advantageous for the top wall.

### Method

The objects are further achieved by a method for manufacturing a wall of a container, such as a container as described herein, the method comprising the following steps:
- providing a paper-based layer;
- providing a barrier layer being an at least one-sided metallized polymer layer, preferably an at least one-sided metallized polyester layer, more preferably an at least one-sided metallized polyethylene terephthalate (mPET) layer;
- providing a lamination layer;
- bonding the paper-based layer and the barrier layer using the lamination layer;
   wherein the lamination layer has a grammage of at most 20 gsm, preferably at most 15 gsm, more preferably at most 12 gsm, more preferably at most 10 gsm, more preferably at most 8 gsm, more preferably at most 6 gsm, more preferably at most 5 gsm, most preferably at most 4 gsm.

It is understood that substantially the same advantages and features mentioned with respect to the wall of the container equally apply to the method for manufacturing a wall of a container. Further, the features may be combined and/or interchangeably applied to aspects, embodiments and examples of the container and the method, respectively. Respective advantages of the method are described herein with respect to the container.

Preferably, the method comprises further method steps so as to provide the features mentioned in the context of the container.

### Container

The objects are further achieved by a container for products of the food industry, comprising: a side wall as described herein (i.e., described as the wall herein), optionally the side wall further comprises one or two kraft liners and a printed clay-coated kraft paper, arranged adjacent the paper-based layer towards an outer side of the container; a bottom wall as described herein, the bottom wall at least partially circumscribing a bottom edge of the side wall; a top wall as described herein, the top wall at least partially circumscribing a top edge of the side wall. Respective advantages of the container for products of the food industry are described herein with respect to the container comprising a wall.

In various examples of the container described herein, the container has a tubular shape, such as a can, wherein the wall of the container is a tubular side wall, optionally wherein the bottom wall is a disc-shaped bottom wall, optionally wherein the top wall is a disc-shaped top wall. In this manner, the container provides for a user-friendly shape, which facilitates that a user can easily grab the container. Certainly, other shapes of the container are possible and fully encompassed by the present disclosure.

In various examples of the container described herein, the container comprises at least 70%, preferably at least 75%, more preferably at least 80%, more preferably at least 85%, more preferably at least 90%, most preferably at least 95% by mass of paper-based material. The mass of paper-based material may be understood as the share of paper described elsewhere herein.

In various examples of the container described herein, the wall, optionally the bottom wall, further optionally the top wall do not comprise aluminum.

In various examples of the container described herein, the barrier layer may have (after converting), a water vapor barrier of about less than <1 gram/square meter/day. This may be the case under tropical condition, e.g., 38°C and 90%relative humidity.

In various examples of the container described herein, the barrier layer may have an oxygen barrier of about less than 2 cubic centimeter/square meter/day/bar. This may be the case under conditions of about 23°C and 50% relative humidity.

### Brief description of the accompanying embodiments

In the following, preferred embodiments are described, by way of example only. Reference is made to the following accompanying figures:
- Fig. 1: shows a schematic of a container according to an embodiment of the present disclosure.
- Fig. 2: shows a schematic cross-section of a wall of a container for products of the food industry according to an embodiment of the present disclosure.
- Fig. 3: shows a schematic cross-section of a bottom wall of a container for products of the food industry according to an embodiment of the present disclosure.
- Fig. 4: shows a schematic cross-section of a top wall of a container for products of the food industry according to an embodiment of the present disclosure.
- Fig. 5: shows a schematic flow chart of a method according to an embodiment of the present disclosure.

### Detailed description of the embodiments

### Definitions

The expression share of paper may additionally or alternatively be understood as fiber share, e.g., cellulose fibers from wood, fiber crops, wastepaper, or rags. Typically, the expression share of paper relates to the share taking the overall mass of the container for products of the food industry as the reference. For instance, a share of paper of 95% means that 95% of the mass of the container is paper-based or paper. It is understood that the goods within the container do not contribute to the weight of the container meant herein.

The grammage as referred to herein is the area density of a product, i.e., the mass per unit area. In the context of the present disclosure, the grammage is expressed in grams (g) per square meter (g/m²), i.e., gsm.

An ionomer may be a polymer composed of repeating units of electrically neutral and ionized units. The ionized units may be covalently bonded to the polymer. In one example, the ionized units may be carboxylic acid groups.

The coefficient of friction (COF) is a dimensionless number that is defined as the ratio between friction force and normal force. A low COF of a layer and/or material facilitates processing thereof when, for instance, pull belts are employed for handling of such a layer and/or material.

A "polyolefin" or "polyolefins" are a type of polymer with the general formula (CH₂CHR)ₙ where R is an alkyl group. They may also be referred to as polyalkenes.

"PE" as used herein refers to polyethylene. "PP" as used herein refers to polypropylene. "PA" as used herein refers to polyamides. "PET" as used herein refers to polyethylene-terephthalate. "PBT" as used herein refers to polybutylene-terephthalate. "PHB" as used herein refers to polyhydroxy-butyrate. "PLA" as used herein refers to polylactide. "PEF" as used herein refers to polyethylene-furanoate.

### Figures

Subsequently, presently preferred embodiments will be outlined, primarily with reference to the above Figures. It is noted that further embodiments are certainly possible, and the below explanations are provided by way of example only, without limitation. Further, the present invention can also be used in other embodiments not explicitly disclosed hereafter. Moreover, as detailed below, the embodiments are compatible with each other, and individual features of one embodiment may also be applied to another embodiment.

Throughout the present figures and specification, the same reference numerals refer to the same elements. The figures may not be to scale, and the relative size, proportions, and depiction of elements in the figures may be exaggerated for clarity, illustration, and convenience.

The terms "one end", "the other end", "outer side", "upper", "above", "inner side", "under", "below", "horizontal", "vertical", "coaxial", "central", "end" "part", "length", "outer end" etc., which indicate the orientation or positional relationship, are based on the orientation or positional relationship shown in the drawings.

The terms "upper", "above", "below", "under" and the like as used in the present invention to indicate a relative position in space are used for the purpose of facilitating explanation to describe a container, wall, part, component and/or feature shown in the drawings relative to the relationship of another container, wall, part, component and/or feature.

The term of the relative position in space may be intended to include different orientations of the container, wall, part, component and/or feature other than those shown in the figures. For example, if the container, wall, part, component and/or feature in the figure is turned over, the container, wall, part, component and/or feature described as being "below" or "under" other containers, walls, parts, components and/or features will be "above" the other container, wall, part, component and/or feature. Therefore, the exemplary term "below" can encompass both the above and below orientations.

The container, wall, part, component and/or feature can be oriented in other ways (rotated by 90 degrees, 180 degrees or other orientations), and the space-related descriptors used herein are explained accordingly. More specifically, the word "above" means that one container, wall, part, component and/or feature is arranged or configured relatively in an exterior direction of the container, wall, part, component and/or feature towards another container, wall, part, component and/or feature; the word "below" means that one container, wall, part, component and/or feature is arranged or configured relatively in an interior direction of the container, wall, part, component and/or feature towards the another container, wall, part, component and/or feature.

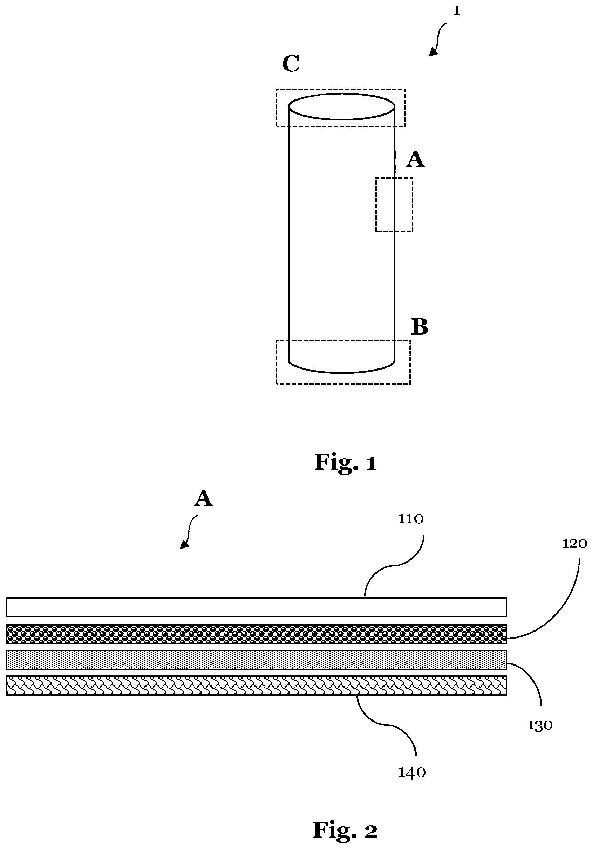

**Fig. 1** shows a schematic of a container 1 according to an embodiment of the present disclosure. As can be seen, the container 1 has the shape of a can. The container 1 may store any kind of products, e.g., potato or other chips, food powder, such as dehydrated food powder, coffee, milk powder, tobacco, crisp food products, snacks, nuts, or the like. The container 1 may be a paper based spiral wound can. The container may comprise a side wall (A), a bottom wall (B) and a top wall (C). The top wall may facilitate opening of the container 1 so as to allow a consumer to access the interior of it.

As can be seen, the container 1 has a tubular shape, such as a can. The side wall of the container 1 is a tubular side wall. The bottom wall is a disc-shaped bottom wall and provides for a closure of one end of the side wall. The top wall is a disc-shaped top wall and provides for a closure of the other end of the side wall. In the configuration as shown in Fig. 1, the container 1 is arranged substantially vertically. However, when rotated, the container may also be arranged horizontally or in any other direction.

In Fig. 1, the bottom wall of the container 1 stands on a ground, which may typically be the case during ordinary use of the container 1. Thereby, the bottom wall is arranged on a vertically lower end of the side wall. The top wall is arranged on a vertically upper end of the side wall.

**Fig. 2** shows a schematic cross-section of a wall (A) of a container for products of the food industry according to an embodiment of the present disclosure. The wall (A) may be a side wall of the container as indicated in Fig. 1.

The wall comprises a paper-based layer 110. The wall further comprises a barrier layer 130 being an at least one-sided metallized polymer layer, preferably an at least one-sided metallized polyester layer, more preferably an at least one-sided metallized polyethylene terephthalate (mPET) layer. Most preferably, the barrier layer 130 is a double-sided metallized polyethylene terephthalate (mPETm) layer. Further, the wall comprises a lamination layer 120, bonding the paper-based layer 110 and the barrier layer 130. The lamination layer 120 may be an adhesive or a PE layer. The barrier layer 130 of the wall may have a thickness of between 6 µm and 12 µm.

The thickness may be measured along a substantially straight line perpendicularly to a main surface of the wall.

The wall of the container 1 further comprises a sealing layer 140, which is an ionomer, preferably an abrasion resistant, extrusion coated layer, for at least partially sealing the container 1. The sealing layer 140 may be arranged adjacent the barrier layer 130 on a side of the barrier layer 130 facing away from the paper-based layer 110. The ionomer extrusion coated layer, preferably the ionomer abrasion resistant extrusion coated layer comprises polyamide (PA), in particular polyamide 6. The sealing layer 140 may have a grammage of between 12 to 22 gsm.

The abrasion resistance has the advantage that the sealing layer 140 is not damaged, e.g., in case the filling goods have sharp edges, such as chips.

Further layers are certainly encompassed by this embodiment and the wall is not limited to the ones presented. For instance, the wall further comprises one or two kraft liners and a printed clay-coated kraft paper, arranged adjacent the paper-based layer towards an outer side of the container 1. The outer side of the container 1 may best be seen in Fig. 1.

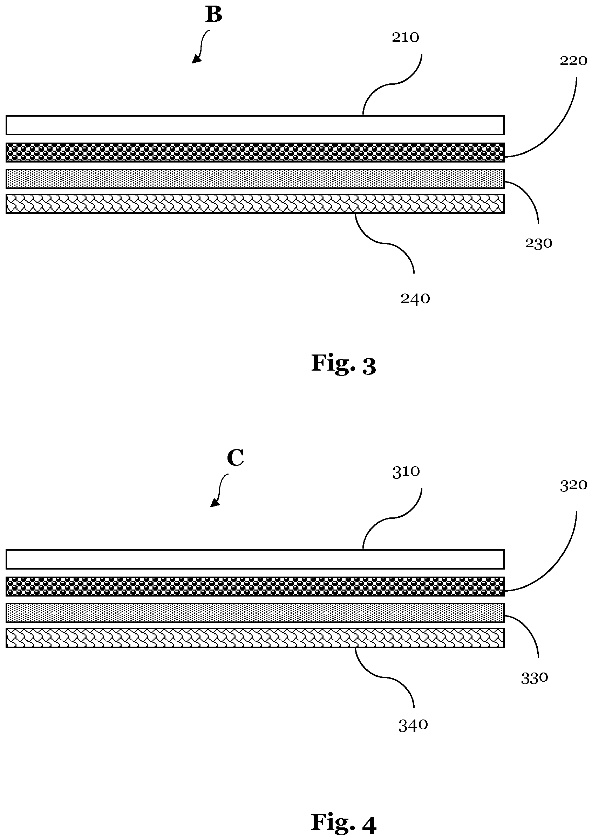

**Fig. 3** shows a schematic cross-section of a bottom wall (B) of a container for products of the food industry according to a preferred embodiment of the present disclosure. The arrangement of the bottom wall (B) can best be seen in Fig. 1.

The bottom wall comprises similar layers as the wall described with reference to Fig. 2. Predominantly the differences may be described in here. The bottom wall comprises a paper-based layer 210, which is a cardboard-based layer 210. The barrier layer 230 is an at least one-sided metallized polymer layer, preferably an at least one-sided metallized polyester layer, more preferably an at least one-sided metallized polyethylene terephthalate (mPET) layer. Most preferably, the barrier layer 230 is a double-sided metallized polyethylene terephthalate (mPETm) layer. Further, the bottom wall comprises a lamination layer 220, bonding the paper-based layer 210 and the barrier layer 230. The lamination layer 220 may be a PE layer. The barrier layer 230 of the bottom wall may have a thickness of between 6 µm and 12 µm.

The bottom wall further comprises a sealing layer 240, being an ionomer abrasion resistant extrusion coated layer, for at least partially sealing the container 1. The sealing layer 240 is arranged adjacent the barrier layer 230 opposite the paper-based layer 210. The sealing layer 240 may have a grammage of between 12 to 22 gsm.

The cardboard-based layer 210 of the bottom wall may have a grammage of between 150-400 gsm, particularly in the range from 180-250 gsm.

**Fig. 4** shows a schematic cross-section of a top wall (C) of a container 1 for products of the food industry according to a preferred embodiment of the present disclosure. The arrangement of the top wall (C) can best be seen in Fig. 1.

The top wall comprises similar layers as the wall described with reference to Fig. 2. Predominantly the differences may be described in here. The top wall comprises a sealing layer 340 comprising a peel coating such that the sealing layer 340 of the top wall has a rather high peel force as described herein. The paper-based layer 310 is a paper layer, preferably a kraft paper layer, and most preferably a machine glazed bleached kraft paper layer. The lamination layer 320 may be a PE layer.

The sealing layer 340 of the top wall has a grammage of between 10 gsm and 45 gsm. Most preferably, the grammage is between 20 and 30 gsm.

The barrier layer 330 of the top wall may have a thickness of between 8 µm and 12 µm.

The embodiments described herein allow to produce a container with an extremely high fiber share, e.g., of at least 95%. This facilitates recycling in any kind of conventionally used paper waste stream, which makes the container very cost-effective. In addition, the construction of the layer of any one of the walls of the embodiments described herein facilitates that a sufficient performance of the walls and/or the container during manufacturing, such as converting is provided. Further, during application and handling by the consumer the mechanical integrity, the sealing, and the barrier is also ensured. The low grammage of the layers, e.g., of the lamination, the barrier layer, and the sealing layer, reduces the polymer share, which makes recycling even easier. The metallization of the barrier layer of the top wall improves the optical density, which facilitates that an unwanted scrap rate during an optical sensor control is minimized.

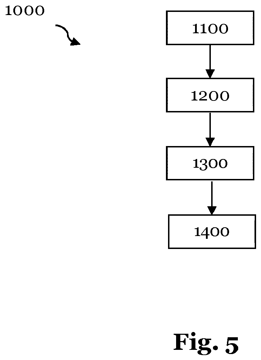

Fig. 5 shows a schematic flow chart of a method 1000 according to an embodiment of the present disclosure. The method 1000 for manufacturing a wall of a container 1, comprises the following steps:
- providing 1100 a paper-based layer;
- providing 1200 a barrier layer being an at least one-sided metallized polymer layer, preferably an at least one-sided metallized polyester layer, more preferably an at least one-sided metallized polyethylene terephthalate (mPET) layer;
- providing 1300 a lamination layer;
- bonding 1400 the paper-based layer and the barrier layer using the lamination layer;
wherein the lamination layer has a grammage of at most 20 gsm, preferably at most 15 gsm, more preferably at most 12 gsm, more preferably at most 10 gsm, more preferably at most 8 gsm, more preferably at most 6 gsm, more preferably at most 5 gsm, most preferably at most 4 gsm.

### Examples

The following examples may further aid in understanding the container as described herein without wishing to be bound and/or limited to these examples. In the below examples, higher numbers of a layer indicate that said layer is arranged closer to the interior of the container. For instance, layer (4) is located closer to the interior than layer (3).

### Side wall

(0) clay-coated kraft paper having a printing thereon facing the environment, two kraft liners adjacent thereon and closer to the interior of the container.
(1) paper-based layer (grammage of 22-70 gsm).
(2) lamination layer, consisting of PE (grammage of 3-4 gsm).
(3) barrier layer being a double-sided metallized polyethylene terephthalate (mPETm) layer (thickness of 6-12 µm).
(4) sealing layer being an ionomer abrasion resistant extrusion coated layer (grammage of 12-22 gsm).

### Bottom wall

(1) paper-based layer being a cardboard-based layer (grammage of 180-250 gsm).
(2) lamination layer, consisting of PE (grammage of 10-15 gsm).
(3) barrier layer being a double-sided metallized polyethylene terephthalate (mPETm) layer (thickness of 6-12 µm).
(4) sealing layer being an ionomer abrasion resistant extrusion coated layer (grammage of 12-22 gsm).

### Top wall

(1) paper-based layer being a machine glazed bleached kraft paper layer (grammage of 40-80 gsm).
(2) lamination layer, consisting of PE (grammage of 4-20 gsm).
(3) barrier layer being a double-sided metallized polyethylene terephthalate (mPETm) layer (thickness of 8-12 µm).
(4) sealing layer comprising a peel coating such that the sealing layer of the top wall has a peel force as described elsewhere herein (grammage of 20-30 gsm).

It is noted that the above embodiments and examples may be combined with further aspects as described herein and details of the embodiments and examples may also be omitted, as will be understood by the skilled person. The scope of protection is determined by the claims and is not limited by the embodiments and examples disclosed in the above figures.

It will be apparent to those skilled in the art that numerous modifications and variations of the described examples and embodiments are possible in light of the above teaching. The disclosed examples and embodiments are presented for purposes of illustration only. Other embodiments may include some or all of the features disclosed herein. Therefore, it is the intent to cover all such modifications and alternate embodiments as may come within the true scope of this invention.

### List of reference signs

- A: wall/side wall
- B: bottom wall
- C: top wall

- 1: container
- 110: paper-based layer
- 120: lamination layer
- 130: barrier layer
- 140: sealing layer

- 210: paper-based layer
- 220: lamination layer
- 230: barrier layer
- 240: sealing layer

- 310: paper-based layer
- 320: lamination layer
- 330: barrier layer
- 340: sealing layer

- 1000: method
- 1100: providing
- 1200: providing
- 1300: providing
- 1400: bonding

## Claims

1. A container (1) for products of the food industry, the container (1) comprising a wall comprising:
- a paper-based layer (110, 210, 310);
- a barrier layer (130, 230, 330) being an at least one-sided metallized polymer layer, preferably an at least one-sided metallized polyester layer, more preferably an at least one-sided metallized polyethylene terephthalate (mPET) layer;
- a lamination layer (120, 220, 320), bonding the paper-based layer (110, 210, 310) and the barrier layer (130, 230, 330);
wherein the lamination layer (120, 220, 320) has a grammage of at most 20 grams per square meter, gsm, preferably at most 15 gsm, more preferably at most 12 gsm, more preferably at most 10 gsm, more preferably at most 8 gsm, more preferably at most 6 gsm, more preferably at most 5 gsm, most preferably at most 4 gsm.

2. The container (1) according to the preceding claim, wherein the barrier layer (130, 230, 330) is a double-sided metallized polymer layer, preferably a double-sided metallized polyethylene terephthalate (mPETm) layer.

3. The container (1) according to any one of the preceding claims, wherein the polymer of the at least one-sided and/or double-sided metallized polymer is selected from a list comprising polyester and polyolefin,
wherein, optionally, polyester comprises polyethylene-terephthalate (PET), polybutylene-terephthalate (PBT), polyethylene-furanoate (PEF), polyhydroxy-butyrate (PHB), polylactide (PLA) and the like,
wherein, optionally, polyolefin comprises polyethylene (PE), polypropylene (PP) and the like.

4. The container (1) according to any one of the preceding claims, wherein the barrier layer (130, 230, 330) has a thickness of at most 30 µm, preferably at most 25 µm, more preferably at most 20 µm, more preferably at most 18 µm, more preferably at most 16 µm, more preferably at most 14 µm, most preferably at most 12 µm, and/or
wherein the barrier layer (130, 230, 330) has a thickness of at least 0.5 µm, preferably at least 1 µm, preferably at least 2 µm, more preferably at least 3 µm, more preferably at least 4 µm, more preferably at least 5 µm, most preferably at least 6 µm.

5. The container (1) according to any one of the preceding claims, wherein the paper-based layer (110, 210, 310) has a grammage of at most 400 grams per square meter, gsm, preferably at most 300 gsm, more preferably at most 200 gsm, more preferably at most 150 gsm, more preferably at most 120 gsm, more preferably at most 100 gsm, more preferably at most 90 gsm, more preferably at most 80 gsm, most preferably at most 70 gsm, and/or
wherein the paper-based layer (110, 210, 310) has a grammage of at least 10 gsm, preferably at least 14 gsm, more preferably at least 16 gsm, more preferably at least 18 gsm, more preferably at least 20 gsm, most preferably at least 22 gsm.

6. The container (1) according to any one of the preceding claims, wherein the lamination layer (120, 220, 320) has a grammage of at least 0.5 gsm, preferably at least 1 gsm, more preferably at least 1.5 gsm, more preferably at least 2 gsm, more preferably at least 2.5 gsm, most preferably at least 3 gsm.

7. The container (1) according to any one of the preceding claims, wherein the wall further comprises:
- a sealing layer (140, 240, 340), being an ionomer extrusion coated layer, for at least partially sealing the container (1), preferably arranged adjacent the barrier layer (130, 230, 330) on a side of the barrier layer (130, 230, 330) facing away from the paper-based layer (110, 210, 310),
preferably wherein the ionomer extrusion coated layer comprises polyamide (PA), in particular polyamide 6.

8. The container (1) according to the preceding claim, wherein the sealing layer (140, 240, 340) has a grammage of at most 40 grams per square meter, gsm, preferably at most 35 gsm, more preferably at most 30 gsm, more preferably at most 28 gsm, more preferably at most 26 gsm, more preferably at most 24 gsm, most preferably at most 22 gsm, and/or
wherein the sealing layer has a grammage of at least 2 gsm, preferably at least 4 gsm, more preferably at least 6 gsm, more preferably at least 8 gsm, more preferably at least 10 gsm, most preferably at least 12 gsm.

9. The container (1) according to any one of the preceding claims, wherein the lamination layer (120, 220, 320) comprises or substantially consists of a polyolefin,
wherein, optionally, polyolefin comprises polyethylene (PE), polypropylene (PP), wherein, preferably, the lamination layer (120, 220, 320) consists of PE or an ethylene-based copolymer or terpolymer.

10. The container (1) according to any of the preceding claims, wherein the wall is a bottom wall, wherein:
- the paper-based layer (210) is a cardboard-based layer;
- the lamination layer (220) is a polyethylene (PE) layer;
wherein the lamination layer has a grammage of at most 25 gsm, preferably at most 20 gsm, preferably at most 18 gsm, more preferably at most 16 gsm, most preferably at most 15 gsm, and/or
of at least 2 gsm, preferably at least 4 gsm, more preferably at least 6 gsm, more preferably at least 8 gsm, more preferably at least 10 gsm.

11. The container (1) according to claim 10, wherein the cardboard-based layer (210) of the bottom wall has a grammage of at most 400 grams per square meter, gsm, preferably at most 350 gsm, more preferably at most 320 gsm, more preferably at most 300 gsm, more preferably at most 280 gsm, more preferably at most 260 gsm, most preferably at most 250 gsm, and/or
wherein the cardboard-based layer (210) of the bottom wall has a grammage of at least 60 gsm, preferably at least 100 gsm, more preferably at least 120 gsm, more preferably at least 140 gsm, more preferably at least 160 gsm, most preferably at least 180 gsm.

12. The container (1) according to any of the preceding claims, wherein the wall is a top wall, the top wall further comprising:
- a sealing layer (340) comprising a peel coating such that the sealing layer (140, 240, 340) of the top wall has a peel force of at least 2 N/15 mm, preferably at least 3 N/15 mm, more preferably at least 4 N/15 mm, most preferably at least 5 N/15 mm, and/or
of at most 30 N/15 mm, preferably at most 25 N/15 mm, more preferably at most 20 N/15 mm, more preferably at most 15 N/15 mm, more preferably at most 10 N/15 mm, most preferably at most 8 N/15 mm;
- wherein the paper-based layer (310) is a paper layer, preferably a kraft paper layer, more preferably a machine glazed bleached kraft paper layer.

13. The container (1) according to the preceding claim, wherein the sealing layer (340) of the top wall has a grammage of at most 45 grams per square meter, gsm, preferably at most 40 gsm, more preferably at most 38 gsm, more preferably at most 36 gsm, more preferably at most 34 gsm, more preferably at most 32 gsm, most preferably at most 30 gsm, and/or
wherein the sealing layer (340) of the top wall has a grammage of at least 10 gsm, preferably at least 12 gsm, more preferably at least 14 gsm, more preferably at least 16 gsm, more preferably at least 18 gsm, most preferably at least 20 gsm.

14. A method (1000) for manufacturing a wall of a container (1), such as a container (1) according to any one of the preceding claims, the method (1000) comprising the following steps:
- providing a paper-based layer (110, 210, 310);
- providing a barrier layer (130, 230, 330) being an at least one-sided metallized polymer layer, preferably an at least one-sided metallized polyester layer, more preferably an at least one-sided metallized polyethylene terephthalate (mPET) layer;
- providing a lamination layer (120, 220, 320);
- bonding the paper-based layer (110, 210, 310) and the barrier layer (130, 230, 330) using the lamination layer (120, 220, 320);
wherein the lamination layer (120, 220, 320) has a grammage of at most 20 gsm, preferably at most 15 gsm, more preferably at most 12 gsm, more preferably at most 10 gsm, more preferably at most 8 gsm, more preferably at most 6 gsm, more preferably at most 5 gsm, most preferably at most 4 gsm.

15. A container (1) for products of the food industry, comprising:
a side wall according to any one of the claims 1 to 9, optionally the side wall further comprises one or two kraft liners and a printed clay-coated kraft paper, arranged adjacent the paper-based layer (110) towards an outer side of the container (1) ;
a bottom wall according to any of claims 10 to 11, the bottom wall at least partially circumscribing a bottom edge of the side wall;
a top wall according to any one of the claims 12 to 13, the top wall at least partially circumscribing a top edge of the side wall.
